# EUROPEAN PATENT SPECIFICATION

(11) **EP 3 618 351 B1**
(45) Date of publication and mention of the grant of the patent: **18.03.2026**
(21) Application number: 18790772.0
(22) Date of filing: 19.04.2018
(51) Int. Cl.: H04L 12/28, H04L 41/0631, H04L 43/0817

(54) **A VIRTUAL PORT MANAGEMENT METHOD AND DEVICE**
VERFAHREN UND VORRICHTUNG ZUR VERWALTUNG VIRTUELLER PORTS
PROCÉDÉ ET DISPOSITIF DE GESTION DE PORT VIRTUEL

(30) Priority: 26.04.2017 CN 201710283962
(43) Date of publication of application: 04.03.2020
(73) Proprietor: ZTE Corporation, Shenzhen, Guangdong 518057 (CN)
(72) Inventor: LI, Yufeng, Shenzhen Guangdong 518057 (CN); LI, Mingsheng, Shenzhen Guangdong 518057 (CN); DIAO, Yuanjiong, Shenzhen Guangdong 518057 (CN); CHEN, Aimin, Shenzhen Guangdong 518057 (CN); YUAN, Liquan, Shenzhen Guangdong 518057 (CN)
(74) Representative: Canzler & Bergmeier Patentanwälte Partnerschaft mbB
(86) International application number: PCT/CN2018/083641
(87) International publication number: WO 2018/196671

(56) References cited:
- EP-A1- 3 148 112
- CN-A- 102 137 169
- CN-A- 105 007 180
- CN-A- 106 169 982
- US-A1- 2009 161 677
- US-A1- 2010 322 252
- US-A1- 2013 329 547

## Description

### TECHNICAL FIELD

The present disclosure relates to the field of communications, in particular to a virtual port management method and device.

### BACKGROUND

With the maturity of access network technology and the irresistible fact of "exit of copper and development of optical fiber" in the construction of the global broadband network, Fiber to the home (FTTH) is gradually becoming a hot spot in network development and a final target for network construction. The conventional Any Digital Subscriber line (xDSL), Ethernet Passive Optical Network (EPON), Gigabit-Capable Passive Optical network (GPON), and future 10G PON, Next Generation PON Version 2 (NG-PON2) all need to study management models for FTTH, so as to simplify the operation management of conventional access networks, offer user-oriented services, and provide better and more flexible services for users.

Different access network devices are introduced in different development stages of the access network. As a result, various physical ports and service configuration models related to the physical ports are complicated and inconvenient to maintain. Particularly, Ethernet-related services have a plurality of problems such as high maintenance and configuration cost, difficulty in maintaining service models, and the like.

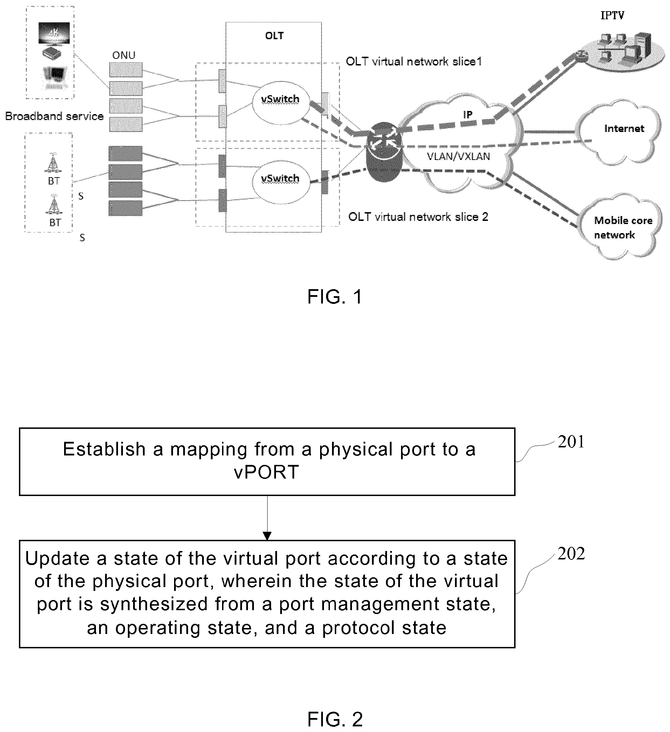

As shown in Fig. 1, on the occasion that the conventional access networks are transforming to novel access networks such as Software Defined Network (SDN)/Network Function Virtualization (NFV), some operators have proposed Optical Line Terminal (OLT) network slicing as a solution for the problems of multi-service bearer isolation and independent management and maintenance.

Access network standardization organizations represented by BBF (BroadBand Forum) have written a novel access network slicing standard document WT-370 under the advocacy of some operators such as Vodafone. The core problems of network slicing or network sharing involved are: 1) different slices, VLAN spaces, MAC spaces and IP spaces of three services, namely home broadband service, enterprise service and mobile backhaul service, may overlap and be independently planned without mutual influence; 2) different network slices may be used for broadband internet access, Voice Over IP (VOIP), and IP Television (IPTV) in home broadband service, and the slicing granularity is a Unique Network Identifier (UNI) port for an Optical Network Unit (ONU), a GPON Encapsulation Method Port (GEMPORT)/Logic Link Identifier (LLID), or a Virtual Port (vPORT). These network slicing PON layer resources are managed and configured in a unified manner, layers L2/L3 manage, control and forward resources independently, and an independence degree of the slices may be flexibly configured.

Access network virtualization quickly builds up one or more logical virtual access networks on a physical network as needed. The virtual access network consists of a Layer 2 connection (simulated Layer 2 circuit) and a Layer 2 switching device (vSwitch). The Layer 2 connection is provided by a physical network spanning multiple devices, such as a Ethernet service flow from a certain UNI port of a ONU to a GEMPORT under a PON port of an OLT, which service flow includes configurations such as bandwidth, Quality of Service (QoS), and the like, and which service flow connects and goes through a plurality of devices including the ONU and the OLT. The Virtual Switch (vSwitch) is a logical Layer 2 switch, and may be virtually implemented on a single OLT in a simple scenario.

Therefore, there is an urgent need to perform unified port maintaining and managing on various miscellaneous hardware platforms in the access network, to implement unified modeling between ONU, UNI physical ports managed by basic network operators and service virtual ports managed by virtual network operators, so as to meet future operation and maintenance management requirements of novel SDN access networks.

US 2013329547 A1 discloses a communication device including a plurality of physical ports, the communication device holding information for associating each of at least one logical port and at least two physical ports.

US 2009161677 A1 discloses a communication proxy method, device and system, the method including: after receiving a packet communicated between a provider device and the access device, performing a conversion process between the physical port and the logic port to physical port information or logic port information in the packet received according to mapping information between the physical port and the logic port.

EP 3148112 A1 discloses an information processing method, a network node, an authentication method, the information processing method including: the operator preconfigures an ID list or an ID number segment of the CPEs on the central node OLT; after one or more CPEs are powered on, each CPE sends a go-online notification carrying a device type of the first access node being CPE to the central node; after receiving the go-online notification, the central node determines that the device type of the first access node is CPE, selects an unassigned ID from the preconfigured ID number segment or ID list, and assigns the selected ID to the first access node.

### SUMMARY

The invention is set out in the appended set of claims.

Other features and advantages of the disclosure will be set forth in the description which follows, and will become apparent from the description at least partially, or be understood by implementing the disclosure. Objects and other advantages of the disclosure may be realized and obtained by means of the structures particularly pointed out in the description, appended claims and drawings.

### BRIEF DESCRIPTION OF DRAWINGS

Accompanying drawings are provided for further understanding of the technical solution of the disclosure and constitute a part of the specification. Hereinafter, these drawings are intended to explain the technical solution of the disclosure together with the following examples, but should not be considered as a limitation to the technical solution of the disclosure.
Fig. 1 is a schematic diagram of an architecture in related art for multi-service bearer isolation and independent management and maintenance by network slicing;
Fig. 2 is a schematic flow chart illustrating a virtual port management method according to Embodiment I of the disclosure;
Fig. 3 is a schematic diagram of a management model for abstracting a physical port into a virtual port and service flow based on different access hardware platforms according to an embodiment of the disclosure;
Fig. 4 is a schematic diagram illustrating a relation between the virtual port and Eth service flow described according to ITU-T G.805 model in an embodiment of the disclosure;
Fig. 5 is a schematic diagram of an example in which service flow accessed from GPON enters an upstream network after encapsulation;
Fig. 6 is a schematic diagram illustrating synthesis of the state of the virtual port in an embodiment of the disclosure;
Fig. 7 is a schematic diagram illustrating an xPON alarm reporting relation in an embodiment of the disclosure; and
Fig. 8 is a schematic structural diagram of a virtual port management device according to Embodiment II of the disclosure.

### DETAILED DESCRIPTION

For clarity and better understanding of the objects, technical solution and advantages of the disclosure, embodiments of the disclosure will now be described in detail in conjunction with the accompanying drawings. It should be noted that the examples of the disclosure and features therein may be combined with each other in any manner as long as they are not contradictory.

The steps illustrated in the flowchart of the drawings may be executed in a computer system such as a set of computer executable instructions. Also, although a logical order is shown in the flowchart, in some cases, the steps shown or described may be performed in a different order than illustrated herein.

The present application aims to simplify port management in different access network platform systems (such as GPON, EPON, XDSL) by abstracting out a service-oriented virtual port. In addition, the virtual port may be used for SDNized novel access network-oriented network sharing and network slicing services based on basic network operators, namely, the virtual port may be created and managed by a virtual network operator. The virtual network operator may locate and troubleshoot network problems by monitoring the state of the virtual port, thereby improving the network management efficiency.

### Example.

A virtual port management method is provided, which, as shown in Fig. 2, may include steps 201 to 202.

At step 201, establishing a mapping from a physical port to a vPORT (virtual port).

At step 202, updating a state of the virtual port according to a state of the physical port, wherein the state of the virtual port is synthesized (derived) from one of:
a port management state and an operating state; and
a port management state, an operating state, and a protocol state.

In the virtual port management method according to the embodiment of the disclosure, by establishing a mapping relation between the physical port and the virtual port, and monitoring and managing the state of the virtual port, sharing of network resources and unified management of interfaces for an SDNized OLT are realized conveniently, which, on one hand, satisfies management and maintenance requirements of a novel SDN access network in the future, and, on the other hand, facilitates addressing some practical problems such as responsibility definition, network management and maintenance for a basic network operator and a virtual network operator.

In practical applications, the virtual port management method of the embodiment may be implemented by an OLT. Although, as described below, the vPORT is configured in an ONU view, an entity and state changes of the vPORT are both monitored by the OLT, and the vPORT may be configured in an offline manner when the ONU is not online, only the relation of the vPORT is present in the ONU view. However, the ONU view is actually also under the PON port, i.e. under the OLT. Therefore, the virtual port management method of the embodiment may take the OLT as a general executing body (executor).

The step of establishing the mapping from the physical port to the virtual port includes: for one optical network unit, ONU, a home unit Home Unit corresponds to one vPORT.

In one implementation, the step of establishing the mapping from the physical port to the virtual port may include: configuring a mapping relation between the vPORT and physical resources through a resource mapping table.

In one implementation, the step of establishing the mapping from the physical port to the virtual port may include: configuring a PON port in an OLT view, entering the PON port view to configure an ONU, and entering an ONU view to configure a vPORT.

In this embodiment, the port management state may be a port enabled or closed state from an operator or an administrator.

The step of updating the state of the virtual port according to the state of the physical port in the embodiment includes one or the combination of: 1) defaulting the port management state as UP and setting the state of the vPORT to a PORTUP state from absence of a vPORT entity to establishment of the vPORT (i.e., when the vPORT is established); and 2) setting a link operating state from the PORTUP state of the vPORT according to an alarm reporting condition of the operating state. The step of setting the link operating state according to the alarm reporting condition of the operating state may include at least one of: 1) setting the state of the vPORT to a LINKUP state when no alarm occurs; and 2) setting the state of the vPORT to a LINKDOWN state when any alarm is reported.

The step of updating the state of the virtual port according to the state of the physical port in the embodiment includes: setting the state of the virtual port to DOWN when a link event occurs; and wherein the link event may include one or any combination of:
an Errored Frame Event;
an Errored Frame Period Event;
an Errored Frame Seconds Summary Event;
a Link Fault Event; and
a Dying Gasp Event.

The step of updating the state of the virtual port according to the state of the physical port in the embodiment includes: setting the state of the virtual port to DOWN when an AIS or RDI alarm occurs on the physical port.

The step of updating the state of the virtual port according to the state of the physical port in the embodiment includes: setting the state of the virtual port to DOWN when an alarm of a state of a GPON TC physical layer occurs.

In one implementation, the step of updating the state of the virtual port according to the state of the physical port in the embodiment includes one or any combination of: 1) altering the state of the vPORT to a PORTDOWN state when a port management state of the vPORT is DOWN; and 2) configuring the state of the vPORT to a PORTUP state when the port management state DOWN of the vPORT is released.

In one implementation, before updating the state of the virtual port according to the state of the physical port, the method of the embodiment may further include one of: 1) adding a virtual port to a designated virtual network operator; 2) deleting a virtual port from a designated virtual network operator; and3) setting the port management state of the virtual port to UP or DOWN. In this manner, it is possible to manage the virtual port and simultaneously operate the virtual port, such as add or delete a virtual port, update a state of a virtual port, or the like.

The method as described above in the embodiment may be divided into two main parts:
1) Unified modeling from a physical port to a virtual port: establishing a mapping from a physical port to a virtual port, where the mapping may be a one-to-one or one-to-many mapping or the like.

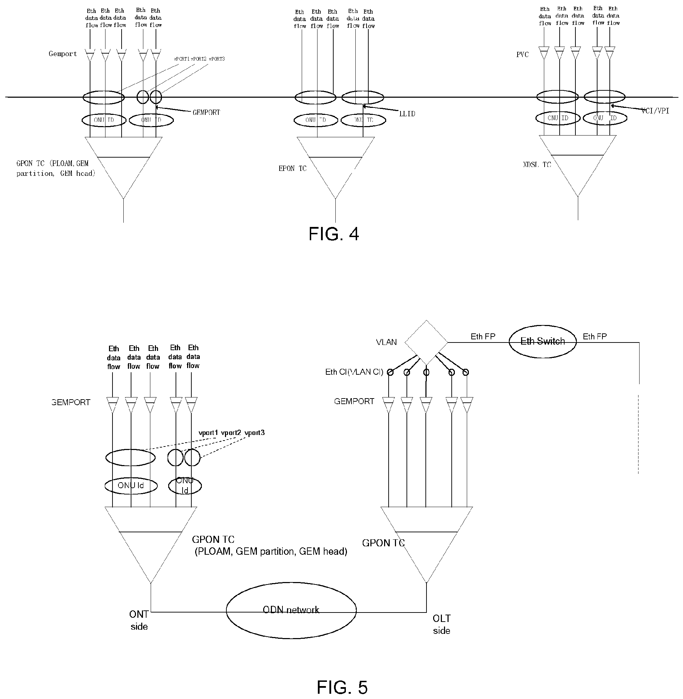

In practical applications, the division of OLT internal resources may be distributed according to an Eth service flow, for which reference may be made to Fig. 4 and the related description.

For example, for a scenario of one OLT and two ONUs (ONU 1, ONU 2), the mapping relation from the physical port to the virtual port in a one-to-one case is as shown in Table 1 below, where uplink ports of the OLT are allocated to virtual network operators in a one-to-one manner.

**Table 1**

| ONU user port number | OLT uplink port | Virtual network operator port number |
|---|---|---|
| ONU 1 user port 1 | Uplink port 1 | Port 1 of operator 1 |
| ONU 2 user port 1 | Uplink port 2 | Port 1 of operator 2 |

For another example, for a scenario of one OLT and two ONUs (ONU 1, ONU 2), the mapping relation from the physical port to the virtual port in a one-to-many case is as shown in Table 2 below, where uplink ports of the OLT are allocated to virtual network operators in a one-to-many manner.

**Table 2**

| ONU user port number | OLT uplink port | Virtual network operator port number |
|---|---|---|
| ONU 1 user port 1 | Uplink port 1 | Port 1 of operator 1 |
| ONU 2 user port 1 | Uplink port 1 | Port 1 of operator 2 |

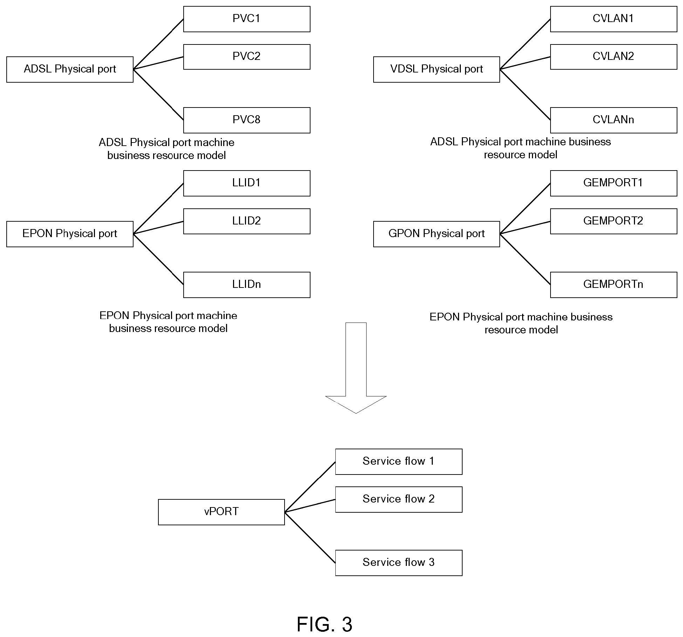

For the case where the uplink port 1 is allocated to different virtual network operators, forwarding planes may be distinguished by a tunnel port, such as an MPLS or Virtual Extensible LAN (VXLAN) tunnel. With reference to the scenario in Fig. 3, when the OLT has two uplink ports, for example, numbered as uplink port 1 and uplink port 2, there may be two situations according to the above two tables, i.e., two uplink ports divided into two OLT virtual slices, and one uplink port divided into two OLT virtual slices.

2) State synthesis of the virtual port operated and maintained for virtual network operators: the state of the virtual port may be synthesized from a port management state, an operating state, and a protocol state. The operating state may be synthesized mainly from an associated physical port state, an Ethernet Operation Administration and Maintenance (Eth OAM) state, and a Transmission convergence (TC) layer state.

### Example 1

As can be seen from Fig. 3, the access network interfaces introduced at different generations are of various types, which is not beneficial to subsequent network resource sharing and unified management of ports for an SDNized OLT, thereby forming a prominent contradiction at present. In addition, the network management for SDN tends to adopt a novel NETCONF/YANG management tool, which is substantially different from the traditional network management models. Therefore, as shown in Fig. 3, a resource management model that abstracts a physical port into a virtual port and service flow based on different access hardware platforms needs to be defined.

vPORT is defined as follows: vPORT intends to be provided for a virtual network operator as a virtual interface according to link resources. The virtual interface is dedicated to Ethernet services, represents a service unit as a port for data forwarding, and focuses only on the service itself. The creation, deletion, state modification of a vPORT are maintained by a VNO (virtual network operator) to which the vPORT belongs. A basic network operator may also create and delete vPORT entities, but the operation should always keep synchronization in the mapping table of virtual resources and physical resources.

The abstraction of vPORT aims to abstract out a service interface of the access network, abstract out a virtual port dedicated to Ethernet services according to different types of physical ports of the access network, such as physical port resources PVC, GEMPORT, LLID, and the like. According to the scenario of an FTTH/FTTB access network, the abstract model of vPORT is: one ONU may correspond to one vPORT according to different division manners of the Home Units.

As shown in Fig. 4, the virtual port, vPORT, is described based on an ITU-T G.805 data model: the abstraction of vPORT aims to abstract out the service interface of the access network, wherein the vPORT actually represents a service unit and focuses only on the service itself. By decoupling the mapping relation (TC layer) of the service, the parts below the TC layer are managed by a conventional access network, thereby realizing layer stripping of the service layer interface and the underlying mapping.

As shown in Fig. 4, one Home Unit corresponds to one vPORT, and is divided (partitioned) and deployed according to the operator's requirements (the division and configuration may be performed based on VLAN, VLAN+ priorities, or other service requirements). Three access network technologies, GPON, EPON, and XDSL, are shown in Fig. 4, respectively, wherein through a unified abstraction, it can be seen that vPORT may completely strip the underlying TC mapping or implementation, and be abstracted into a logical port that focuses only on services.

Fig. 5 shows a data flow adaptation process for transmitting a client Ethernet service to an upstream optical transmission network after the client Ethernet service being encapsulated by a Gigabit-Capable Passive Optical Network (GPON). As shown in Fig. 5, the Eth service flow may be distinguished by VLAN or Class of Service (COS) in the Eth data frame. The Eth data flow is mapped by GEM and marked with a PORT ID to form a GEMPORT data frame. The OLT side will mark a physical ONU ID on a Physical layer OAM (PLOAM) based on LOID according to a logical ONU ID (the ID of the ONU when the ONU is being configured through a command line) and the ONU having been online, thereby establishing at a physical PON port a corresponding relation with the entity ONU. The data frame is mapped by the GEMPORT and arrives at the OLT through the GPON port and the ODN network. The OLT-decapsulated Eth data flow may pass through the uplink port after aggregation, and then enter the upstream network via an aggregation switch.

The aim of focusing on an isolation point of the Ethernet service layer and the GPON data encapsulating layer is to abstract out the service layer of the Ethernet. In Fig. 5, one ONU corresponds to one Home Unit in the FTTH application; but one ONU may further serve for more than one Home Units in the FTTH application, so some ONUs may correspond to one virtual interface (vPORT) abstracted from a Home Unit. Specifically, one ONU may correspond to one vPORT according to different division manners of the Home Units. Service models of the Home Units may be divided and deployed based on VLAN, VLAN+ priorities, etc. according to the operator's requirements.

Before introducing the vPORT, an outbound interface of a routing entry needs to determine explicit physical PON layer resources. Table 3 below is an example of the physical PON layer resources for an outbound interface of a routing entry before introducing the vPORT.

**Table 3**

| Destination IP | Destination IP mask | Outbound interface | COST value |
|---|---|---|---|
| 2.2.2.2 | 255.255.255.0 | gpon-onu_1/5/1_GEMPORT10 | 10 |

After introducing the vPORT, the outbound interface of the routing entry only needs to fill in the vPORT interface. Table 4 below is an example of the outbound interface of the routing entry and the physical PON layer resources after introducing the vPORT. The mapping relation between the vPORT and the physical resources may be implemented by a resource mapping table. An example of a resource mapping table is shown in Table 5 below. In this manner, an advantage is that a basic network operator can easily divide the physical resources for different virtual network operators by means of resource distribution, thereby realizing multi-tenant applications. The vPORT only needs to focus on the service layer itself.

**Table 4**

| Destination IP | Destination IP mask | Outbound interface | COST value |
|---|---|---|---|
| 2.2.2.2 | 255.255.255.0 | vPORT 1 | 10 |

**Table 5**

| vPORT | Physical interface resources |
|---|---|
| vPORT 1 | GEMPORT 10 |
| vPORT 2 | GEMPORT 11, 12, 13 |
| vPORT 3 | GEMPORT 14 |

Wherein, the management and maintenance model of the virtual port is defined as follows:
1) In a QoS model, the virtual interface is a service interface. Therefore, the Qos model, as the general interface of the ETH data flow, may be used as a QoS rate-limiting unit for the total flow of the user.
2) The virtual port may be used as a minimum unit for user data flow MAC learning.
3) A mapping is conducted between the GEMPORT and the ETH FLOW according to the Flow Class (TC), where reference is specifically made to BBF TR-156 and TR-280, such as mapping according to priorities, or VLAN+ priorities, etc., referring to G.988.
4) The GEMPORT corresponds to the data flow TC, and a transport container (T-CONT) corresponds to the PON layer TC. GEMPORT and T-CONT correspond to each other one by one, where reference may be made to (BBF TR-156). GEMPORT and T-CONT are managed by a basic network operator or a basic network PON layer. The home service management of the virtual interface is oriented to Ethernet-related services.
5) Configuration relation among the OLT, the ONU and the vPORT: configuring a PON port in an OLT view, entering the PON port view to configure the ONU, and entering the ONU view to configure the vPORT. For example, interface gpon-onu_1/5/1:1, where gpon-onu_1/5/1 represents a GPON port 1/5/1, and the ID "1" after the colon is an ONU ID under the PON port. The vPORT is configured under an ONU view after configuration of the interface gpon-onu_1/5/1:1.

### Example 2

The state of the virtual port may be synthesized from:
1) Port management state: a port enabled or closed state from an operator or an administrator.
2) Operating state:
   a) a physical link state, a state of an UNI physical port associated with the virtual port.
      After the physical port is set to DOWN, according to the OMCI definition, an LAN-LOS alarm is sent to inform the OLT; and the operating state of the virtual interface is altered to DOWN according to the LAN-LOS signal.
   b) an OAM-related state alarm that enables the port of Ethernet OAM.
      B1, IEEE 802.3ah EFM functions are enabled, and the port supports link monitoring and detection.
         Supporting general link events, including an Errored Frame Event, an Errored Frame Period Event, and an Errored Frame Seconds Summary Event; supporting transmission of RDI (Remote Defect Indication) packets; while supporting processing of the RDI packets sent from a peer end and trasmnitting the defect information of the peer end to an upper layer protocol for processing.
         Supporting Emergency link events, including a Link Fault and a Dying Gasp.
         When any of these events occurs, the port state is set to DOWN.
      B2, IEEE 802.1ag/Y.1731 CFM functions, supporting ETH Continuity Check Message (CCM).
         Supporting an ETH-AIS function, transmitting a high-level AIS after the connection is interrupted, stopping transmitting AIS when the connection is restored, restraining reporting of high-level alarm from a local terminal after receiving an AIS from a remote terminal;
         supporting an ETH-RDI function to receive and transmit RDls;
         when an AIS or RDI alarm occurs at the port, the port state is set to DOWN.
   c) State alarm of a GPON TC physical layer: signals detected by the ONU (at a PON port level): LOS, LOF, SF, and SD. When the port gives any of these alarms, the port state is set to DOWN.
3) Protocol state.

For example, in a state where an IP protocol requires peer information to protocol the state of UP, BLOCK/FORWARD of the protocol requires a service protocol to set. For example, a BLOCK port is required when a port loopback is found, while normally it is FORWARD. Specifically, the addition of states depends on requirements of the service and involves a broader scope.

The states of the virtual port are defined as follows:
LINKUP -- no alarm of operating state occurs, the vPORT link state is UP, and there is no alarm causing LINKDOWN.
LINKDOWN -- an alarm of an associated operating state as defined above is present. The synthesis of the LINKDOWN state needs to make reference to whether an alarm is generated with respect to the above-mentioned operating and protocol states.
PORTUP -- the port is in a state where management is enabled, i.e., UP, which is also a system default state, and when the system is powered on, it is converted into other states such as LINKUP, LINKDOWN, PORTDOWN.
PORTDOWN -- the port is a state where management is closed, i.e., DOWN, which will cover any other state.

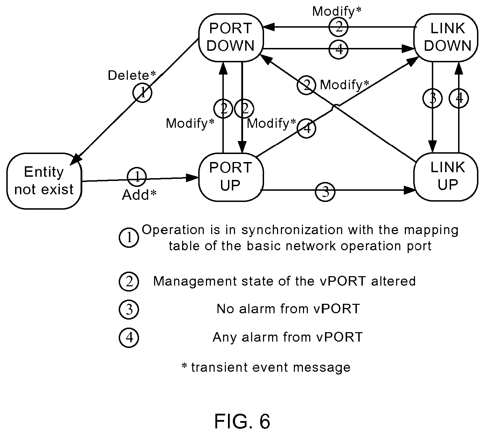

In Fig. 6, synthesis of the state of the virtual port is shown, wherein messages marked with an asterisk represent transient event messages of the virtual port, which event cannot be inquired in an integrated EMS platform, but can be recorded in a system log for later analysis.

These messages for virtual port transient events include: additions: adding a virtual port to a designated virtual network operator; deletions: deleting a virtual port from a designated virtual network operator; and modifications: setting the virtual port to management UP or DOWN.

Transition relation of the vPORT states:
There are two types of vPORT management, PORTUP and PORTDOWN, and there are also two types of operating states, LINKUP and LINKDOWN.

From absence of a vPORT entity to establishment of the vPORT, the default state after the establishment of the vPORT is UP, and the state of the vPORT is set to a PORTUP state.

From the PORTUP state of the vPORT, the link operating state is set according to an alarm reporting condition of the operating state. The state of the vPORT is set to a LINKUP state when no alarm occurs.

From the PORTUP state of the vPORT, the link state is set according to an alarm reporting condition of the operating state. The state of the vPORT is set to a LINKDOWN state when any alarm is reported.

In the LINKUP state, the state is set to the LINKDOWN state if any alarm occurs. Otherwise, if all alarms disappear in the LINKDOWN state, the state is set to the LINKUP state again.

The vPORT has a management state DOWN, and in any state of the vPORT, such as PORTUP, LINKUP, or LINKDOWN, if the administrator sets the vPORT management state to DOWN, the state of the vPORT is altered to a PORTDOWN state.

If the management state DOWN is released, i.e., the vPORT is configured to the PORTUP state, the system repeats the above state alteration relation starting from PORTUP.

To delete a vPORT, the vPORT entity needs to first set the management to DOWN, so as to prevent the service carried by the vPORT from being affected. Only in the PORTDOWN state, the vPORT can be deleted.

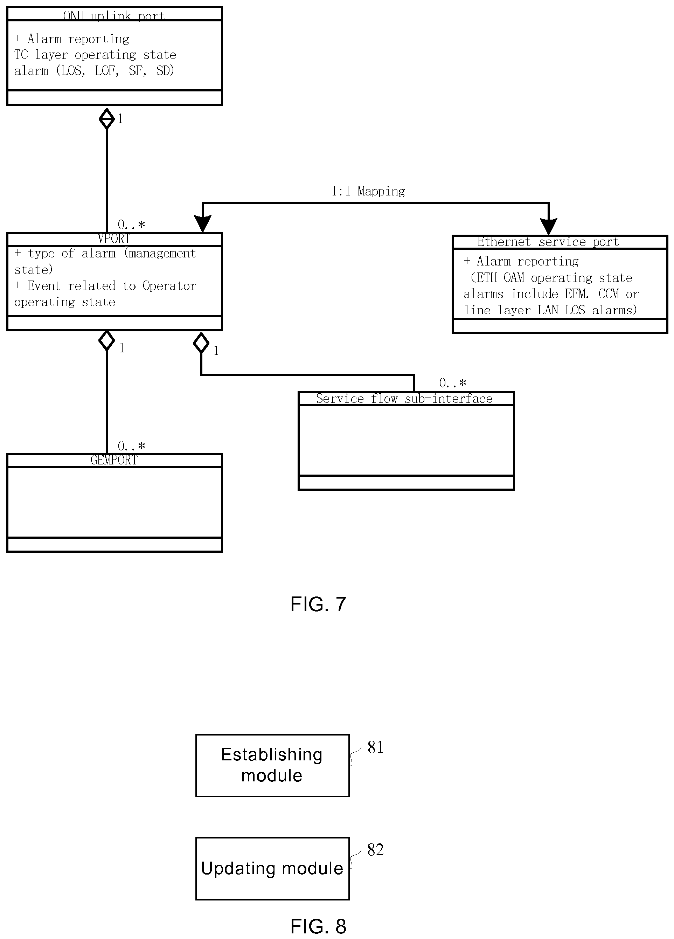

As shown in Fig. 7, an xPON alarm reporting relation modeling for application of NETCONF/YANG management of a novel SDN network is shown. As shown in Fig. 7, the management state of the vPORT is directly associated with the state of the vPORT. The vPORT is in a 1:1 mapping relation with the simulated Ethernet interface. An alarm related to EOAM is reported through the Ethernet interface and then synthesized to the operating state of the vPORT. The TC layer related alarm is associated with the PON port, and thus is synthesized through the state of the ONU uplink port, as another synthetic source of the vPORT operating state.

### Embodiment II

A virtual port management device is provided, which, as shown in Fig. 8, may include:
an establishing module 81 configured to establish a mapping from a physical port to a virtual port, vPORT;
an updating module 82 configured to update a state of the virtual port according to a state of the physical port, wherein the state of the virtual port is synthesized from one of:
   a port management state and an operating state; and
   a port management state, an operating state, and a protocol state.

In one implementation, the establishing module 81 establishing the mapping from the physical port to the virtual port may include: corresponding one Home Unit to one vPORT for one ONU.

In one implementation, the establishing module 81 establishing the mapping from the physical port to the virtual port may include: configuring a mapping relation between the vPORT and physical resources through a resource mapping table.

In one implementation, the establishing module 81 establishing the mapping from the physical port to the virtual port may include: configuring a PON port in an OLT view, entering the PON port view to configure an ONU, and entering an ONU view to configure a vPORT.

In this embodiment, the port management state is a port enabled or closed state from an operator or an administrator.

In one implementation, the updating module 82 updating the state of the virtual port according to the state of the physical port includes one or any combination of:
defaulting the port management state as UP and setting the state of the vPORT to a PORTUP state from absence of a vPORT entity to establishment of the vPORT; and
setting a link operating state from the PORTUP state of the vPORT according to an alarm reporting condition of the operating state.

In one implementation, the updating module 82 setting the link operating state according to the alarm reporting condition of the operating state includes at least one of:
setting the state of the vPORT to a LINKUP state when no alarm occurs; and
setting the state of the vPORT to a LINKDOWN state when any alarm is reported.

In one implementation, the updating module 82 updating the state of the virtual port according to the state of the physical port includes: setting the state of the virtual port to DOWN when a link event occurs; and the link event includes one or any combination of: an Errored Frame Event; an Errored Frame Period Event; an Errored Frame Seconds Summary Event; a Link Fault Event; and a Dying Gasp Event.

In one implementation, the updating module 82 updating the state of the virtual port according to the state of the physical port includes: setting the state of the virtual port to DOWN when an AIS or RDI alarm occurs on the physical port.

In one implementation, the updating module 82 updating the state of the virtual port according to the state of the physical port includes: setting the state of the virtual port to DOWN when an alarm of a state of a GPON TC physical layer occurs.

In one implementation, the updating module 82 updating the state of the virtual port according to the state of the physical port includes one or any combination of: altering the state of the vPORT to a PORTDOWN state when a port management state of the vPORT is DOWN; and configuring the state of the vPORT to a PORTUP state when the port management state DOWN of the vPORT is released.

In one implementation, before updating the state of the virtual port according to the state of the physical port, the updating module 82 is further configured to perform one of: adding a virtual port to a designated virtual network operator; deleting a virtual port from a designated virtual network operator; and setting the port management state of the virtual port to UP or DOWN.

The virtual port management device of this embodiment can implement all details of the method described in Embodiment I, and reference may be made to the relevant description of the method. In practical applications, the virtual port management device of this embodiment may be disposed on an OLT or other similar devices to implement the above functions and the method of Embodiment I, or the virtual port management device of this embodiment may be directly implemented by an OLT or other similar devices.

In practical applications, the establishing module 81 and the updating module 82 may be implemented by software, hardware or a combination of the two. For example, the establishing module 81 and the updating module 82 may be implemented by executing corresponding programs via a processor of the **OLT,** which is not limited herein.

### Embodiment III

Still another virtual port management device is provided, including:
a memory storing a virtual port management program;
a processor configured to execute the virtual port management program to perform the following operations: establishing a mapping from a physical port to a virtual port, vPORT; updating a state of the virtual port according to a state of the physical port, wherein the state of the virtual port is synthesized from one of:
   a port management state and an operating state; and
   a port management state, an operating state, and a protocol state.

The virtual port management device of this embodiment can implement all details of the method described in Embodiment I, and reference may be made to the relevant description of the method. In practical applications, the virtual port management device of this embodiment may be disposed on an OLT or other similar devices to implement the above functions and the method of Embodiment I, or the virtual port management device of this embodiment may be directly implemented by an OLT or other similar devices.

Furthermore, the present application provides a computer readable storage medium, the computer readable storage medium stores a virtual port management program which, when executed by a processor, causes the steps of the virtual port management method as described above to be implemented.

Optionally, in this embodiment, the storage medium may include, but is not limited to: a U Disk, a read-only memory (ROM), a random access memory (RAM), a mobile hard disk, a disk or optical disk, and other media that can store a program code.

Optionally, in this embodiment, the processor executes the steps of the method of the above embodiments according to the program codes stored in the storage medium.

Optionally, specific examples in the present embodiment may refer to the examples described in the foregoing embodiments and alternative implementations, which will not be repeated in the present embodiment.

One of ordinary skill in the art will appreciate that all or part of the steps described above may be implemented by a program stored in a computer readable storage medium for instructing the associated hardware (e.g., a processor), such as a read-only memory, a magnetic or optical disk, and the like. Optionally, all or part of the steps of the above embodiments may be implemented using one or more integrated circuits. Accordingly, each module/unit in the above embodiments may be implemented in the form of hardware, for example, realizing corresponding functions by an integrated circuit, or may be implemented in the form of a software functional module, for example, realizing corresponding functions by executing programs/instructions stored in a memory by a processor. The present disclosure is not limited to any particular combination form of hardware and software.

The foregoing has shown and described the basic principles and principal features of the present application, as well as advantages of the present application. The present application is not intended to be limited by the above-described embodiments. The above embodiments and the description are merely illustrative of the principles of the present application, and various changes and modifications may be made without departing from the scope of the invention/method/device as defined in the appended claims.

### Industrial Applicability

The present application is adapted to the field of communications, and by establishing a mapping relation between the physical port and the virtual port, and monitoring and managing the state of the virtual port, network resource sharing and unified management of interfaces for an SDN OLT are realized conveniently, the present disclosure, on the one hand, satisfies future management and maintenance of a novel SDN access network, and, on the other hand, facilitates addressing some practical problems such as responsibility definition, network management and maintenance for a basic network operator and a virtual network operator.

## Claims

1. A virtual port management method applied to an optical network, comprising:
establishing (201) a mapping from a physical port to a virtual port, vPORT;
updating (202) a state of the virtual port according to a state of the physical port, wherein the state of the virtual port is synthesized from one of:
a port management state and an operating state; and
a port management state, an operating state, and a protocol state;
wherein the step of establishing the mapping from the physical port to the virtual port comprises:
corresponding one Home Unit to one vPORT for one ONU,
**characterized in that**,
the step of updating the state of the virtual port according to the state of the physical port comprises one of:
defaulting the port management state as UP and setting the state of the vPORT to a PORTUP state from absence of a vPORT entity to establishment of the vPORT;
setting a link operating state from the PORTUP state of the vPORT according to an alarm reporting condition of the operating state;
setting the state of the virtual port to DOWN when an AIS or RDI alarm occurs on the physical port;
setting the state of the virtual port to DOWN when an alarm of a state of a GPON TC physical layer occurs;
altering the state of the vPORT to a PORTDOWN state when a port management state of the vPORT is DOWN;
configuring the state of the vPORT to a PORTUP state when the port management state DOWN of the vPORT is released; and
setting the state of the virtual port to DOWN when a link event occurs, wherein the link event comprises one or any combination of: an Errored Frame Event; an Errored Frame Period Event; an Errored Frame Seconds Summary Event; a Link Fault Event; and a Dying Gasp Event.

2. The management method according to claim 1, wherein the step of establishing the mapping from the physical port to the virtual port further comprises one of:
configuring a mapping relation between the vPORT and physical resources through a resource mapping table; and
configuring a PON port in an OLT port entering the PON port to configure an ONU, and entering an ONU port to configure a vPORT.

3. The management method according to claim 1, wherein
the port management state is a port enabled or closed state from an operator or an administrator.

4. The management method according to claim 1, wherein the step of setting the link operating state according to the alarm reporting condition of the operating state comprises at least one of:
setting the state of the vPORT to a LINKUP state when no alarm occurs; and
setting the state of the vPORT to a LINKDOWN state when any alarm is reported.

5. The management method according to claim 1, wherein before updating the state of the virtual port according to the state of the physical port, the method further comprises one of:
adding a virtual port to a designated virtual network operator;
deleting a virtual port from a designated virtual network operator; and
setting the port management state of the virtual port to UP or DOWN.

6. A virtual port management device applied to an optical network, comprising:
an establishing module (81) configured to establish a mapping from a physical port to a virtual port, vPORT;
an updating module (82) configured to update a state of the virtual port according to a state of the physical port, wherein the state of the virtual port is synthesized from one of:
a port management state and an operating state; and
a port management state, an operating state, and a protocol state;
wherein the establishing module establishing the mapping from the physical port to the virtual port comprises:
corresponding one Home Unit to one vPORT for one ONU;
**characterized in that**,
the updating module updating the state of the virtual port according to the state of the physical port comprises one of:
defaulting the port management state as UP and setting the state of the vPORT to a PORTUP state from absence of a vPORT entity to establishment of the vPORT;
setting a link operating state from the PORTUP state of the vPORT according to an alarm reporting condition of the operating state;
setting the state of the virtual port to DOWN when an AIS or RDI alarm occurs on the physical port;
setting the state of the virtual port to DOWN when an alarm of a state of a GPON TC physical layer occurs;
altering the state of the vPORT to a PORTDOWN state when a port management state of the vPORT is DOWN;
configuring the state of the vPORT to a PORTUP state when the port management state DOWN of the vPORT is released: and
setting the state of the virtual port to DOWN when a link event occurs, wherein the link event comprises one or any combination of: an Errored Frame Event; an Errored Frame Period Event; an Errored Frame Seconds Summary Event; a Link Fault Event; and a Dying Gasp Event.

7. The management device according to claim 6, wherein the establishing module establishing the mapping from the physical port to the virtual port further comprises one of:
configuring a mapping relation between the vPORT and physical resources through a resource mapping table; and
configuring a PON port in an OLT port, entering the PON port to configure an ONU, and entering an ONU port to configure a vPORT.

8. The management device according to claim 7, wherein
the port management state is a port enabled or closed state from an operator or an administrator.

9. The management device according to claim 7,
wherein the updating module setting the link operating state according to the alarm reporting condition of the operating state comprises at least one of:
setting the state of the vPORT to a LINKUP state when no alarm occurs; and
setting the state of the vPORT to a LINKDOWN state when any alarm is reported.

10. The management device according to claim 7, wherein before updating the state of the virtual port according to the state of the physical port, the updating module is further configured to perform one of:
adding a virtual port to a designated virtual network operator;
deleting a virtual port from a designated virtual network operator; and
setting the port management state of the virtual port to UP or DOWN.

11. A virtual port management device applied to an optical network, comprising:
a memory storing a virtual port management program;
a processor configured to execute the virtual port management program to perform the following operations: establishing a mapping from a physical port to a virtual port, vPORT; and updating a state of the virtual port according to a state of the physical port, wherein the state of the virtual port is synthesized from one of:
a port management state and an operating state; and
a port management state, an operating state, and a protocol state;
wherein the step of establishing the mapping from the physical port to the virtual port comprises:
corresponding one Home Unit to one vPORT for one ONU;
**characterized in that**,
the step of updating the state of the virtual port according to the state of the physical port comprises one of:
defaulting the port management state as UP and setting the state of the vPORT to a PORTUP state from absence of a vPORT entity to establishment of the vPORT;
setting a link operating state from the PORTUP state of the vPORT according to an alarm reporting condition of the operating state;
setting the state of the virtual port to DOWN when an AIS or RDI alarm occurs on the physical port;
setting the state of the virtual port to DOWN when an alarm of a state of a GPON TC physical layer occurs;
altering the state of the vPORT to a PORTDOWN state when a port management state of the vPORT is DOWN;
configuring the state of the vPORT to a PORTUP state when the port management state DOWN of the vPORT is released; and
setting the state of the virtual port to DOWN when a link event occurs, wherein the link event comprises one or any combination of: an Errored Frame Event; an Errored Frame Period Event; an Errored Frame Seconds Summary Event; a Link Fault Event; and a Dying Gasp Event.

12. A computer readable storage medium, wherein the computer readable storage medium has stores a virtual port management program stored thereon which, when executed by a processor, causes the steps of the virtual port management method applied to the optical network according to any one of claims 1 to 5 to be implemented.

## Patentansprüche

1. Verfahren zum Verwalten eines virtuellen Anschlusses, das auf ein optisches Netzwerk angewendet wird, umfassend:
Herstellen (201) eines Abbildens von einem physikalischen Anschluss auf einen virtuellen Anschluss, vPORT;
Aktualisieren (202) eines Zustands des virtuellen Anschlusses gemäß einem Zustand des physikalischen Anschlusses, wobei der Zustand des virtuellen Anschlusses synthetisiert wird aus einem von:
einem Anschlussverwaltungszustand und einem Betriebszustand; und
einem Anschlussverwaltungszustand, einem Betriebszustand und einem Protokollzustand;
wobei der Schritt des Herstellens des Abbildens von dem physikalischen Anschluss auf den virtuellen Anschluss umfasst:
Zuordnen einer Heimeinheit zu einem vPORT für eine ONU,
**dadurch gekennzeichnet, dass**
der Schritt des Aktualisierens des Zustands des virtuellen Anschlusses gemäß dem Zustand des physikalischen Anschlusses eines umfasst von:
Voreinstellen des Anschlussverwaltungszustands als UP und Einstellen des Zustands des vPORT auf einen PORTUP-Zustand vom Fehlen einer vPORT-Entität bis zur Einrichtung des vPORT;
Einstellen eines Verbindung-Betriebszustands von dem PORTUP-Zustand des vPORT gemäß einer Alarm-Berichten-Bedingung des Betriebszustands;
Einstellen des Zustands des virtuellen Anschlusses auf DOWN, wenn ein AIS- oder RDI-Alarm an dem physikalischen Anschluss auftritt;
Einstellen des Zustands des virtuellen Anschlusses auf DOWN, wenn ein Alarm eines Zustands einer physikalischen Schicht GPON TC auftritt;
Ändern des Zustands des vPORT auf einen PORTDOWN-Zustand, wenn ein Anschlussverwaltungszustand des vPORT DOWN ist;
Konfigurieren des Zustands des vPORT auf einen PORTUP-Zustand, wenn der Anschlussverwaltungszustand DOWN des vPORT freigegeben ist; und
Einstellen des Zustands des virtuellen Anschlusses auf DOWN, wenn ein Verbindungs-Ereignis auftritt, wobei das Verbindungs-Ereignis eines oder eine beliebige Kombination umfasst von: einem Fehler-Rahmen-Ereignis; einem Fehler-Rahmen-Zeitraum-Ereignis; einem Fehler-Rahmen-Sekunden-Zusammenfassungs-Ereignis; einem Verbindungs-Fehler-Ereignis; und einem Dying-Gasp-Ereignis.

2. Verwaltungsverfahren nach Anspruch 1, wobei der Schritt des Herstellens des Abbildens von dem physikalischen Anschluss auf den virtuellen Anschluss ferner eines umfasst von:
Konfigurieren einer Abbildungsbeziehung zwischen dem vPORT und physikalischen Ressourcen durch eine Ressourcen-Abbildungstabelle; und
Konfigurieren eines PON-Anschlusses in einem OLT-Anschluss, Eintreten in den PON-Anschluss, um eine ONU zu konfigurieren, und Eintreten in einen ONU-Anschluss, um einen vPORT zu konfigurieren.

3. Verwaltungsverfahren nach Anspruch 1, wobei
der Anschlussverwaltungszustand ein aktivierter oder geschlossener Anschlusszustand von einem Betreiber oder einem Administrator ist.

4. Verwaltungsverfahren nach Anspruch 1, wobei der Schritt des Einstellens des Verbindung-Betriebszustands gemäß der Alarm-Berichten-Bedingung des Betriebszustands mindestens eines umfasst von:
Einstellen des Zustands des vPORT auf einen LINKUP-Zustand, wenn kein Alarm auftritt; und
Einstellen des Zustands des vPORT auf einen LINKDOWN-Zustand, wenn ein Alarm gemeldet wird.

5. Verwaltungsverfahren nach Anspruch 1, wobei vor dem Aktualisieren des Zustands des virtuellen Anschlusses gemäß dem Zustand des physikalischen Anschlusses das Verfahren ferner eines umfasst von:
Hinzufügen eines virtuellen Anschlusses zu einem bestimmten virtuellen Netzwerk-Betreiber;
Löschen eines virtuellen Anschlusses von einem bestimmten virtuellen Netzwerk-Betreiber; und
Einstellen des Anschlussverwaltungszustands des virtuellen Anschlusses auf UP oder DOWN.

6. Vorrichtung zum Verwalten eines virtuellen Anschlusses, die auf ein optisches Netzwerk angewendet wird, umfassend:
ein Herstellungsmodul (81), das konfiguriert ist, um ein Abbilden von einem physikalischen Anschluss auf einen virtuellen Anschluss, vPORT, herzustellen;
ein Aktualisierungsmodul (82), das konfiguriert ist, um einen Zustand des virtuellen Anschlusses gemäß einem Zustand des physikalischen Anschlusses zu aktualisieren, wobei der Zustand des virtuellen Anschlusses synthetisiert wird aus einem von:
einem Anschlussverwaltungszustand und einem Betriebszustand; und
einem Anschlussverwaltungszustand, einem Betriebszustand und einem Protokollzustand;
wobei das Herstellungsmodul, das das Abbilden von dem physikalischen Anschluss auf den virtuellen Anschluss herstellt, umfasst:
Zuordnen einer Heimeinheit zu einem vPORT für eine ONU;
**dadurch gekennzeichnet, dass**
das Aktualisierungsmodul, das den Zustand des virtuellen Anschlusses gemäß dem Zustand des physikalischen Anschlusses aktualisiert, eines umfasst von:
Voreinstellen des Anschlussverwaltungszustands als UP und Einstellen des Zustands des vPORT auf einen PORTUP-Zustand vom Fehlen einer vPORT-Entität bis zur Herstellung des vPORT;
Einstellen eines Verbindung-Betriebszustands von dem PORTUP-Zustand des vPORT gemäß einer Alarm-Berichten-Bedingung des Betriebszustands;
Einstellen des Zustands des virtuellen Anschlusses auf DOWN, wenn ein AIS- oder RDI-Alarm an dem physikalischen Anschluss auftritt;
Einstellen des Zustands des virtuellen Anschlusses auf DOWN, wenn ein Alarm eines Zustands einer physikalischen Schicht GPON TC auftritt;
Ändern des Zustands des vPORT auf einen PORTDOWN-Zustand, wenn ein Anschlussverwaltungszustand des vPORT DOWN ist;
Konfigurieren des Zustands des vPORT auf einen PORTUP-Zustand, wenn der Anschlussverwaltungszustand DOWN des vPORT freigegeben ist; und
Einstellen des Zustands des virtuellen Anschlusses auf DOWN, wenn ein Verbindungs-Ereignis auftritt, wobei das Verbindungs-Ereignis eines oder eine beliebige Kombination umfasst von: einem Fehler-Rahmen-Ereignis; einem Fehler-Rahmen-Zeitraum-Ereignis; einem Fehler-Rahmen-Sekunden-Zusammenfassungs-Ereignis; einem Verbindungs-Fehler-Ereignis; und einem Dying-Gasp-Ereignis.

7. Verwaltungsvorrichtung nach Anspruch 6, wobei das Herstellungsmodul, das das Abbilden von dem physikalischen Anschluss auf den virtuellen Anschluss herstellt, ferner eines umfasst von:
Konfigurieren einer Abbildungsbeziehung zwischen dem vPORT und physikalischen Ressourcen durch eine Ressourcen-Abbildungstabelle; und
Konfigurieren eines PON-Anschlusses in einem OLT-Anschluss, Eintreten in den PON-Anschluss, um eine ONU zu konfigurieren, und Eintreten in einen ONU-Anschluss, um einen vPORT zu konfigurieren.

8. Verwaltungsvorrichtung nach Anspruch 7, wobei
der Anschlussverwaltungszustand ein aktivierter oder geschlossener Anschlusszustand von einem Betreiber oder einem Administrator ist.

9. Verwaltungsvorrichtung nach Anspruch 7,
wobei das Aktualisierungsmodul, das den Verbindung-Betriebszustand gemäß der Alarm-Berichten-Bedingung des Betriebszustands einstellt, mindestens eines umfasst von:
Einstellen des Zustands des vPORT auf einen LINKUP-Zustand, wenn kein Alarm auftritt; und
Einstellen des Zustands des vPORT auf einen LINKDOWN-Zustand, wenn ein beliebiger Alarm gemeldet wird.

10. Verwaltungsvorrichtung nach Anspruch 7, wobei vor dem Aktualisieren des Zustands des virtuellen Anschlusses gemäß dem Zustand des physikalischen Anschlusses das Aktualisierungsmodul ferner konfiguriert ist, um eines durchzuführen von:
Hinzufügen eines virtuellen Anschlusses zu einem bestimmten virtuellen Netzwerk-Betreiber;
Löschen eines virtuellen Anschlusses von einem bestimmten virtuellen Netzwerk-Betreiber; und
Einstellen des Anschlussverwaltungszustands des virtuellen Anschlusses auf UP oder DOWN.

11. Vorrichtung zum Verwalten eines virtuellen Anschlusses, die auf ein optisches Netzwerk angewendet wird, umfassend:
einen Speicher zum Speichern eines Programms zum Verwalten eines virtuellen Anschlusses;
einen Prozessor, der konfiguriert ist, um das Programm zum Verwalten eines virtuellen Anschlusses auszuführen, um die folgenden Vorgänge durchzuführen: Herstellen eines Abbildens von einem physikalischen Anschluss auf einen virtuellen Anschluss, vPORT; und Aktualisieren eines Zustands des virtuellen Anschlusses gemäß einem Zustand des physikalischen Anschlusses, wobei der Zustand des virtuellen Anschlusses synthetisiert wird aus einem von:
einem Anschlussverwaltungszustand und einem Betriebszustand; und
einem Anschlussverwaltungszustand, einem Betriebszustand und einem Protokollzustand;
wobei der Schritt des Herstellens des Abbildens von dem physikalischen Anschluss auf den virtuellen Anschluss umfasst:
Zuordnen einer Heimeinheit zu einem vPORT für eine ONU;
**dadurch gekennzeichnet, dass**
der Schritt des Aktualisierens des Zustands des virtuellen Anschlusses gemäß dem Zustand des physikalischen Anschlusses eines umfasst von:
Voreinstellen des Anschlussverwaltungszustands als UP und Einstellen des Zustands des vPORT auf einen PORTUP-Zustand vom Fehlen einer vPORT-Entität bis zur Herstellung des vPORT;
Einstellen eines Verbindung-Betriebszustands von dem PORTUP-Zustand des vPORT gemäß einer Alarm-Berichten-Bedingung des Betriebszustands;
Einstellen des Zustands des virtuellen Anschlusses auf DOWN, wenn ein AIS- oder RDI-Alarm an dem physikalischen Anschluss auftritt;
Einstellen des Zustands des virtuellen Anschlusses auf DOWN, wenn ein Alarm eines Zustands einer physikalischen Schicht GPON TC auftritt;
Ändern des Zustands des vPORT auf einen PORTDOWN-Zustand, wenn ein Anschlussverwaltungszustand des vPORT DOWN ist;
Konfigurieren des Zustands des vPORT auf einen PORTUP-Zustand, wenn der Anschlussverwaltungszustand DOWN des vPORT freigegeben ist; und
Einstellen des Zustands des virtuellen Anschlusses auf DOWN, wenn ein Verbindungs-Ereignis auftritt, wobei das Verbindungs-Ereignis eines oder eine beliebige Kombination umfasst von: einem Fehler-Rahmen-Ereignis; einem Fehler-Rahmen-Zeitraum-Ereignis; einem Fehler-Rahmen-Sekunden-Zusammenfassungs-Ereignis; einem Verbindungs-Fehler-Ereignis; und einem Dying-Gasp-Ereignis.

12. Computerlesbares Speichermedium, wobei auf dem computerlesbaren Speichermedium ein Programm zum Verwalten eines virtuellen Anschlusses gespeichert ist, das bei Ausführung durch einen Prozessor bewirkt, dass die Schritte des Verfahrens zum Verwalten eines virtuellen Anschlusses, das auf das optische Netzwerk angewendet wird, nach einem der Ansprüche 1 bis 5 implementiert werden.

## Revendications

1. Procédé de gestion de port virtuel appliqué à un réseau optique, comprenant les étapes consistant à :
établir (201) mapper d'un port physique à un port virtuel, vPORT ;
mettre à jour (202) un état du port virtuel en fonction d'un état du port physique, dans lequel l'état du port virtuel est synthétisé à partir de l'un parmi :
un état de gestion de port et un état de fonctionnement ; et
un état de gestion de port, un état de fonctionnement et un état de protocole ;
dans lequel l'étape consistant à établir le mappage du port physique au port virtuel comprend les étapes consistant à :
faire correspondre une unité domestique à un vPORT pour une ONU,
**caractérisé en ce que**
l'étape consistant à mettre à jour l'état du port virtuel en fonction de l'état du port physique comprend l'une parmi :
mettre par défaut l'état de gestion de port en tant qu'UP et définir l'état du vPORT sur un état PORTUP depuis l'absence d'une entité vPORT jusqu'à l'établissement du vPORT ;
définir un état de fonctionnement de liaison à partir de l'état PORTUP du vPORT en fonction d'une condition de rapport d'alarme de l'état de fonctionnement ;
définir l'état du port virtuel sur DOWN lorsqu'une alarme AIS ou RDI se produit sur le port physique ;
définir l'état du port virtuel sur DOWN lorsqu'une alarme d'un état d'une couche physique GPON TC se produit ;
changer l'état du vPORT sur un état PORTDOWN lorsqu'un état de gestion de port du vPORT est DOWN ;
configurer l'état du vPORT sur un état PORTUP lorsque l'état de gestion de port DOWN du vPORT est dégagé ; et
définir l'état du port virtuel sur DOWN lorsqu'un événement de liaison se produit, dans lequel l'événement de liaison comprend l'un ou une combinaison quelconque parmi : un événement de trame erronée ; un événement de période de trame erronée ; un événement de résumé de secondes de trame erronée ; un événement de défaillance de liaison ; et un événement de défaut de liaison.

2. Procédé de gestion selon la revendication 1, dans lequel l'étape consistant à établir le mappage du port physique au port virtuel comprend en outre l'une parmi :
configurer une relation de mappage entre le vPORT et des ressources physiques par l'intermédiaire d'une table de mappage de ressources ; et
configurer un port PON dans un port OLT, entrer dans le port PON pour configurer une ONU, et entrer dans un port ONU pour configurer un vPORT.

3. Procédé de gestion selon la revendication 1, dans lequel
l'état de gestion de port est un état de port activé ou fermé d'un opérateur ou d'un administrateur.

4. Procédé de gestion selon la revendication 1, dans lequel l'étape consistant à définir l'état de fonctionnement de liaison en fonction de la condition de rapport d'alarme de l'état de fonctionnement comprend au moins l'une parmi :
définir l'état du vPORT sur un état LINKUP lorsqu'aucune alarme ne se produit ; et
définir l'état du vPORT sur un état LINKDOWN lorsqu'une quelconque alarme est rapportée.

5. Procédé de gestion selon la revendication 1, dans lequel, avant de mettre à jour l'état du port virtuel selon l'état du port physique, le procédé comprend en outre l'une des étapes consistant à :
ajouter un port virtuel à un opérateur de réseau virtuel désigné ;
supprimer un port virtuel d'un opérateur de réseau virtuel désigné ; et
définir l'état de gestion de port du port virtuel sur UP ou DOWN.

6. Dispositif de gestion de port virtuel appliqué à un réseau optique, comprenant :
un module d'établissement (81) configuré pour établir un mappage d'un port physique à un port virtuel, vPORT ;
un module de mise à jour (82) configuré pour mettre à jour un état du port virtuel selon un état du port physique, dans lequel l'état du port virtuel est synthétisé à partir de l'un des éléments suivants :
un état de gestion de port et un état de fonctionnement ; et
un état de gestion de port, un état de fonctionnement et un état de protocole ;
dans lequel le module d'établissement établissant le mappage du port physique au port virtuel comprend :
la correspondance d'une unité domestique à un vPORT pour une ONU ;
**caractérisé en ce que**,
le module de mise à jour mettant à jour l'état du port virtuel selon l'état du port physique comprend l'une des étapes consistant à :
mettre par défaut l'état de gestion de port comme UP et définir l'état du vPORT sur un état PORTUP depuis l'absence d'une entité vPORT jusqu'à l'établissement du vPORT ;
définir un état de fonctionnement de liaison à partir de l'état PORTUP du vPORT selon une condition de rapport d'alarme de l'état de fonctionnement ;
définir l'état du port virtuel sur DOWN lorsqu'une alarme AIS ou RDI se produit sur le port physique ;
définir l'état du port virtuel sur DOWN lorsqu'une alarme d'un état d'une couche physique GPON TC se produit ;
changer l'état du vPORT sur un état PORTDOWN lorsqu'un état de gestion de port du vPORT est DOWN ;
configurer l'état du vPORT sur un état PORTUP lorsque l'état de gestion de port DOWN du vPORT est dégagé ; et
définir l'état du port virtuel sur DOWN lorsqu'un événement de liaison se produit, dans lequel l'événement de liaison comprend l'un ou une combinaison quelconque des événements suivants : un événement de trame erronée ; un événement de période de trame erronée ; un événement de résumé de secondes de trame erronée ; un événement de défaillance de liaison ; et un événement de défaut de liaison.

7. Dispositif de gestion selon la revendication 6, dans lequel le module d'établissement établissant le mappage du port physique au port virtuel comprend en outre l'une des étapes consistant à :
configurer une relation de mappage entre le vPORT et des ressources physiques par l'intermédiaire d'une table de mappage de ressources ; et
configurer un port PON dans un port OLT, entrer dans le port PON pour configurer une ONU, et entrer dans un port ONU pour configurer un vPORT.

8. Dispositif de gestion selon la revendication 7, dans lequel
l'état de gestion de port est un état de port activé ou fermé d'un opérateur ou d'un administrateur.

9. Dispositif de gestion selon la revendication 7,
dans lequel le module de mise à jour définissant l'état de fonctionnement de liaison selon la condition de rapport d'alarme de l'état de fonctionnement comprend au moins l'une des étapes consistant à :
définir l'état du vPORT sur un état LINKUP lorsqu'aucune alarme ne se produit ; et
définir l'état du vPORT sur un état LINKDOWN lorsqu'une quelconque alarme est rapportée.

10. Dispositif de gestion selon la revendication 7, dans lequel, avant de mettre à jour l'état du port virtuel selon l'état du port physique, le module de mise à jour est en outre configuré pour réaliser l'une des étapes consistant à :
ajouter un port virtuel à un opérateur de réseau virtuel désigné ;
supprimer un port virtuel d'un opérateur de réseau virtuel désigné ; et
définir l'état de gestion de port du port virtuel sur UP ou DOWN.

11. Dispositif de gestion de port virtuel appliqué à un réseau optique, comprenant :
une mémoire stockant un programme de gestion de port virtuel ;
un processeur configuré pour exécuter le programme de gestion de port virtuel pour réaliser les opérations suivantes : établir un mappage d'un port physique à un port virtuel, vPORT ; et mettre à jour un état du port virtuel selon un état du port physique, dans lequel l'état du port virtuel est synthétisé à partir de l'un des éléments suivants :
un état de gestion de port et un état de fonctionnement ; et
un état de gestion de port, un état de fonctionnement et un état de protocole ;
dans lequel l'étape consistant à établir le mappage du port physique au port virtuel comprend :
correspondre une unité domestique à un vPORT pour une ONU ;
**caractérisé en ce que**,
l'étape consistant à mettre à jour l'état du port virtuel selon l'état du port physique comprend l'une des étapes consistant à :
mettre par défaut l'état de gestion de port comme UP et définir l'état du vPORT sur un état PORTUP depuis l'absence d'une entité vPORT jusqu'à l'établissement du vPORT ;
définir un état de fonctionnement de liaison à partir de l'état PORTUP du vPORT selon une condition de rapport d'alarme de l'état de fonctionnement ;
définir l'état du port virtuel sur DOWN lorsqu'une alarme AIS ou RDI se produit sur le port physique ;
définir l'état du port virtuel sur DOWN lorsqu'une alarme d'un état d'une couche physique GPON TC se produit ;
changer l'état du vPORT sur un état PORTDOWN lorsqu'un état de gestion de port du vPORT est DOWN ;
configurer l'état du vPORT sur un état PORTUP lorsque l'état de gestion de port DOWN du vPORT est dégagé ; et
définir l'état du port virtuel sur DOWN lorsqu'un événement de liaison se produit, dans lequel l'événement de liaison comprend l'un ou une combinaison quelconque des événements suivants : un événement de trame erronée ; un événement de période de trame erronée ; un événement de résumé de secondes de trame erronée ; un événement de défaillance de liaison ; et un événement de défaut de liaison.

12. Moyen de stockage lisible par ordinateur, dans lequel le moyen de stockage lisible par ordinateur a stocké un programme de gestion de port virtuel qui, lorsqu'il est exécuté par un processeur, amène les étapes du procédé de gestion de port virtuel appliqué au réseau optique selon l'une quelconque des revendications 1 à 5 à être mises en œuvre.
